(19) **Europäisches Patentamt / European Patent Office / Office européen des brevets**

(11) **EP 4 716 330 A1**

(12) # EUROPEAN PATENT APPLICATION
published in accordance with Art. 153(4) EPC

(43) Date of publication:
**25.03.2026 Bulletin 2026/13**

(21) Application number: **24824990.6**

(22) Date of filing: **17.04.2024**

(51) International Patent Classification (IPC):
**H04W 72/044** (2023.01)

(52) Cooperative Patent Classification (CPC):
**H04W 72/044; H04W 72/50; H04W 72/542**

(86) International application number:
**PCT/CN2024/088174**

(87) International publication number:
**WO 2024/260089 (26.12.2024 Gazette 2024/52)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **21.06.2023 CN 202310749573**

(71) Applicant: **ZTE Corporation
Shenzhen, Guangdong 518057 (CN)**

(72) Inventors:
- **WANG, Yuxin
  Shenzhen, Guangdong 518057 (CN)**
- **XIA, Shuqiang
  Shenzhen, Guangdong 518057 (CN)**
- **MA, Yihua
  Shenzhen, Guangdong 518057 (CN)**
- **WANG, Zhongbin
  Shenzhen, Guangdong 518057 (CN)**
- **BAI, Chen
  Shenzhen, Guangdong 518057 (CN)**

(74) Representative: **Aipex B.V.
Vestdijk 51
5611 CA Eindhoven (NL)**

(54) **SENSING SEQUENCE SENDING METHOD, SENSING SEQUENCE RECEIVING METHOD, AND COMMUNICATION NODE AND SENSING SYSTEM**

(57)     Provided are a sensing sequence sending method, a sensing sequence receiving method, a communication node, and a sensing system. The sensing sequence sending method is applied to a first communication node, and includes: acquiring a first sensing sequence and a first resource location; and sending the first sensing sequence to a second communication node at the first resource location, where the first sensing sequence is identical to a second sensing sequence or the first sensing sequence and a second sensing sequence form a pair of complementary sequences, and the second sensing sequence is a sensing sequence sent to the second communication node by another first communication node at a second resource location.

FIG. 1

**Description**

TECHNICAL FIELD

The present disclosure relates to the field of communication, for example, to a sensing sequence sending method, a sensing sequence receiving method, a communication node, and a sensing system.

BACKGROUND

Integrated sensing and communications (ISAC) is regarded as one of the key candidate technologies for the 6th-generation(6G). ISAC enables full sharing of the space domain resources, the time domain resources, and the frequency domain resources between wireless communications and radar sensing, thereby achieving their coexistence, mutual assistance, and mutual benefits. Sequence transmission in ISAC is a major research focus. However, no complete solution for implementing sequence transmission in ISAC has yet been proposed.

SUMMARY

The embodiments of the present disclosure provide a sensing sequence sending method applied to a first communication node and including:

A first sensing sequence and a first resource location are acquired; and the first sensing sequence is sent to a second communication node at the first resource location; where the first sensing sequence is identical to a second sensing sequence or the first sensing sequence and a second sensing sequence form a pair of complementary sequences, and the second sensing sequence is a sensing sequence sent by another first communication node to the second communication node at the second resource location.

The embodiments of the present disclosure provide a sensing sequence receiving method applied to a second communication node and including:

A first sensing sequence sent by a first communication node is received at a first resource location, and a second sensing sequence sent by another first communication node is received at a second resource location; the first sensing sequence is identical to the second sensing sequence, or the first sensing sequence and the second sensing sequence form a pair of complementary sequences.

The embodiments of the present disclosure provide a first communication node, and the first communication node includes a processor configured to implement the sensing sequence sending method of any one of the above embodiments when executing a computer program.

The embodiments of the present disclosure provide a second communication node, and the second communication node includes a processor configured to implement the sensing sequence receiving method of any one of the above embodiments when executing a computer program.

The embodiments of the present disclosure provide a sensing system, and the sensing system includes the second communication node in any of the above embodiments, at least two first communication nodes in any of the above embodiments, and a scatterer.

The embodiments of the present disclosure further provide a computer-readable storage medium storing a computer program thereon, and when executed by a processor, the computer program implements the method of any one of the above embodiments.

BRIEF DESCRIPTION OF DRAWINGS

FIG. 1 is a schematic diagram of networking of a sensing system according to an embodiment of the present disclosure.

FIG. 2 is a flowchart of a sensing sequence sending method according to an embodiment of the present disclosure.

FIG. 3 is a flowchart for generating completely complementary sequences through a recursive construction method according to an embodiment of the present disclosure.

FIG. 4 is a flowchart of a sensing sequence receiving method according to an embodiment of the present disclosure.

FIG. 5 is an interactive schematic diagram of a sensing sequence transmission method according to an embodiment of the present disclosure.

FIG. 6 is a schematic diagram illustrating an embodiment in which a frequency domain resource at a first resource location is identical to a frequency domain resource at a second resource location, and a time domain resource at the first resource location, according to an embodiment of the present disclosure.

FIG. 7 is a schematic diagram illustrating an embodiment in which a frequency domain resource at a first resource location is different from a frequency domain resource at a second resource location, and a time domain resource at the first resource location is identical to a time domain resource at the second resource location.

FIG. 8 is a schematic structural diagram of a sensing sequence sending apparatus according to an embodiment of the present disclosure.

FIG. 9 is a schematic structural diagram of a sensing sequence receiving apparatus according to an embodiment of the present disclosure.

FIG. 10 is a schematic structural diagram of a base station according to an embodiment of the present disclosure.

FIG. 11 is a schematic structural diagram of a user equipment (UE) according to an embodiment of the present disclosure.

## DETAILED DESCRIPTION

The specific embodiments described herein are merely used to explain the present disclosure. The embodiments of the present disclosure will be described hereinafter in conjunction with the drawings.

A cellular mobile system possesses powerful networking capabilities. Through large-scale deployment of the cellular network and interactions between a base station and a terminal, between base stations, and between a base station and core network equipment, a mobile network system with integrated communication and sensing can be constructed. Network cooperative sensing based on a cellular mobile system can fully utilize the base station resources of the cellular mobile system, so that the cost of integrated communication and sensing is reduced, and the sensing networking capability is realized. By appropriately selecting sensing base stations within the cellular mobile system and sharing, supplementing, or combining the sensing information, signal interference caused by excessive nodes can be mitigated while preserving the advantages of the cellular network. Furthermore, the sensing network can avoid obstructions through coordination among base stations without upgrading the hardware, thereby further improving sensing performance.

In a narrow sense, the sensing network refers to the system capable of target positioning (such as distance measurement, speed measurement, and angle measurement), target imaging, target detection, target tracking, and target identification. In a broad sense, the sensing network refers to the system capable of sensing the attributes and states of all services, networks, users, and terminals, as well as environmental objects. In a mobile network with integrated communication and sensing, the sensing may be categorized as active sensing and passive sensing. The passive sensing refers to a sensing equipment (such as network-side equipment or terminal equipment) acquiring an electromagnetic wave emitted by the target object (such as a terahertz wave) or a reflecting electromagnetic wave from sources other than the sensing equipment or the target object. The active sensing refers to a sensing equipment (such as network-side equipment or terminal equipment) sending electromagnetic waves and receiving echoes reflected by the target object for sensing. The node receiving the reflected waves is not necessarily the same as the node sending the detection signal, that is, active sensing can be achieved among multiple nodes of the sensing equipment through some form of joint processing.

Wireless sensing signal links can typically be categorized as follows:
(1) a base station echo sensing link: a base station sends a sensing signal and receives an echo signal; (2) an inter-base station sensing link: a base station 2 receives a sensing signal sent by a base station 1; (3) an uplink sensing link: a base station receives a sensing signal sent by a UE; (4) a downlink sensing link: a UE receives a sensing signal sent by a base station; (5) a terminal echo sensing link: a UE sends a sensing signal and receives an echo signal; and (6) an inter-terminal sensing link: a UE 2 receives a sensing signal sent by a UE 1.

In an actual system, different sensing links may be selected according to different sensing requirements, one or more sending nodes and receiving nodes may exist in each sensing link, and the actual sensing system may include multiple different sensing links.

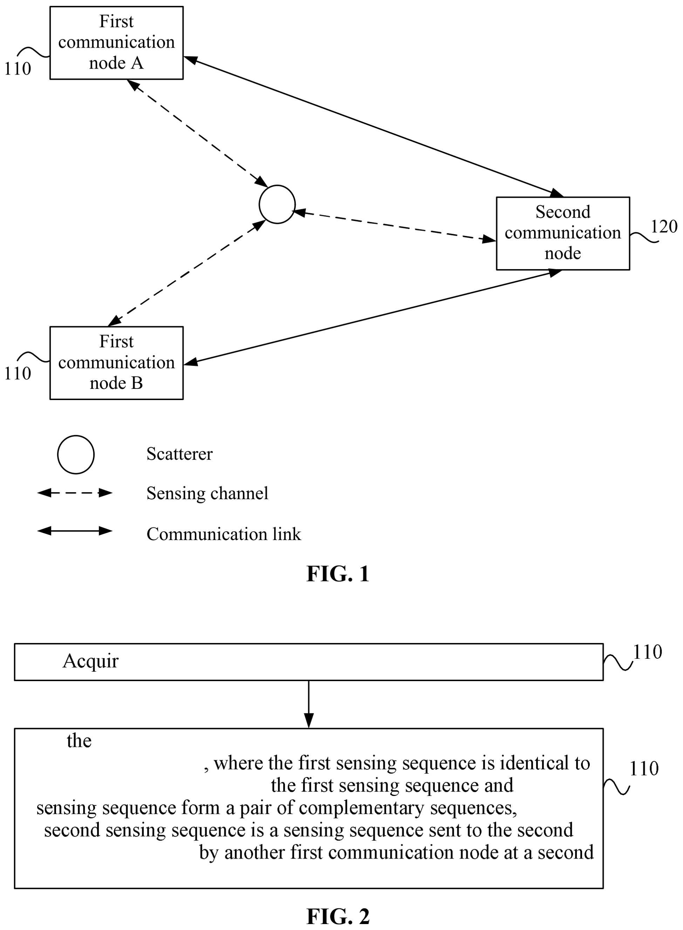

FIG. 1 shows a schematic diagram of networking of a sensing system according to an embodiment of the present disclosure. As shown in FIG. 1, the sensing system includes at least two first communication nodes 110, a second communication node 120, and a scatterer. FIG. 1 is illustrated by taking an example in which two first communication nodes 110 are respectively labeled as the first communication node A and the first communication node B. A communication link is established between the first communication node 110 and the second communication node 120, and a sensing channel exists between the first communication node 110, the second communication node 120, and a scatterer. The scatterer may also be referred to as a sensing target, which is a target to be sensed (such as a building, a tree, or a mobile target) and is capable of scattering and refracting the sensing signal.

The first communication node 110 or the second communication node 120 may be terminal equipment or access network equipment in a wireless communication system, and may also be other types of equipment (such as drones, airplanes, and radar devices). The wireless communication system may be a long term evolution (LTE) system, a 4th-generation(4G) system, a 5th-generation (5G) system, a 5G-and-beyond (B5G) system, an LTE-5G hybrid architecture system, a new radio (NR) system, or a new communication system emerging in future development such as a sixth-generation (6G) system. The wireless communication system includes terminal equipment, access network equipment and core network equipment.

The terminal equipment may be a device having wireless transceiver capability and may be deployed on land (such as indoors or outdoors, handheld, wearable, or vehicle-mounted), on water (such as a ship), or in the air (such as an airplane, a balloon, or a satellite). Examples of terminal equipment include UE, mobile phones, mobile stations, tablet computers, notebook computers, ultra-mobile personal computers (UMPC), handheld computers, netbooks, personal digital assistants (PDA), and other network-connected user equipment; virtual reality (VR) terminals, augmented reality (AR) terminals, wireless terminals in industrial control, wireless terminals in self-driving, wireless terminals in remote medical applications, wireless terminals in smart grids, wireless terminals in transportation safety, wireless terminals in smart cities, wireless terminals in smart homes, and the like; an Internet-of-Things node in the Internet of Things; a vehicle-mounted communication device in the Internet of Vehicles; entertainment or gaming devices or systems; or global positioning system devices. The embodiments of the present disclosure do not limit the technology or form of the terminal equipment. In addition, the terminal equipment may be simply referred to as a terminal.

The access network equipment is an access equipment through which the terminal equipment accesses the wireless communication system in a wireless manner. The access network equipment may be base station or evolved base station (eNB or eNodeB) in long term evolution advanced (LTEA), transmission reception point (TRP), base station or next generation NodeB (gNB) in 5G mobile communication system, base station in future mobile communication system or access node in wireless fidelity (WiFi) system, etc. The base station may include various network-side equipment (such as macro base station, micro base station, home base station, wireless remote station, router, WiFi equipment, primary cell and secondary cell), and location management function (LMF) equipment. The base station may also be a module or unit implementing some functions of the base station. For example, the base station may be a central unit (CU) or a distributed unit (DU). The embodiment of the present disclosure does not limit the technology and equipment form adopted by the access network equipment. Moreover, the access network equipment may be simply referred to as the base station.

The core network equipment may include an access and mobility management element and a session management element. In an example, the terminal equipment may access the core network through the access network equipment to achieve data transmission.

In the embodiments of the present disclosure, a sensing sequence sending method and a sensing sequence receiving method that can be run in the above sensing system are provided, implementing the transmission of the sensing sequence, thus providing support for integrated waveform design.

FIG. 2 shows a flowchart of a sensing sequence sending method according to an embodiment of the present disclosure. As shown in FIG. 2, the method provided by the present embodiment is applicable to a first communication node. In this example, a first communication node (also referred to as a first communication node equipment or a first node) may be the access network equipment, and a second communication node (also referred to as a second communication node equipment or a second node) may be the access network equipment or the terminal equipment. The method includes S110-S120.

S110: A first sensing sequence and a first resource location are acquired.

In an embodiment, "acquiring the first sensing sequence" in S110 may include: acquiring an orthogonal frequency division multiplexing (OFDM) signal, and performing an inverse fast Fourier transform (IFFT) or an inverse discrete Fourier transform (IDFT) on the OFDM signal to acquire the first sensing sequence.

S120: the first sensing sequence is sent to a second communication node at a first resource location. The first sensing sequence is identical to a second sensing sequence, and alternatively, the first sensing sequence and a second sensing sequence form a pair of complementary sequences. The second sensing sequence is a sensing sequence sent to the second communication node by another first communication node at a second resource location.

In an embodiment, the first sensing sequence and the second sensing sequence may be sequences generated by scrambling a same sequence using different sequence IDs, or different frames, or different subframes, or different slots, or different symbol indices. Alternatively, the first sensing sequence and the second sensing sequence may be sequences generated by scrambling a pair of complementary sequences using different sequence IDs, or different frames, or different subframes, or different slots, or different symbol indices.

In an embodiment, before the first sensing sequence is sent to the second communication node at the first resource location, the first communication node needs to establish a communication link with the second communication node. The communication link is established between the first communication node and the second communication node mainly in one of the following two manners:

In a manner 1: when the first communication node is the access network equipment and the second communication node is the access network equipment, the first communication node sends a sensing setup request message to the second communication node. The sensing setup request message includes at least one of indication information or index information of a resource location. The indication information is used to indicate whether the sensing sequence is a complementary sequence, and the resource location includes at least one of a frame, a subframe, a time slot, a symbol, a frequency-domain bandwidth location, a frequency-domain resource block, or a frequency-domain subcarrier. The second communication node determines whether to respond to the sensing setup request message according to the processing capacity and the processing resource status of the second communication node, and sends a sensing setup feedback message to the first communication node. The sensing setup feedback message is used to indicate whether a sensing setup is successful.

In a manner 2: when the first communication node is the access network equipment and the second communication node is the terminal equipment, the first communication node sends a sensing reception instruction to the second communication node. The sensing reception instruction includes at least one of indication information or index information of resource location. The indication information is used to indicate whether the sensing sequence is a complementary sequence, and the resource location includes at least one of a frame, a subframe, a time slot, a symbol, a frequency-domain bandwidth location, a frequency-domain resource block, or a frequency-domain subcarrier.

Through any of the above manners, the communication link is established between the first communication node and the second communication node, so that the first communication node can receive sensing result information sent by the second communication node after sending the first sensing sequence to the second communication node at the first resource location. The sensing result information includes at least one of position information of a sensing target, distance information of a sensing target, speed information of a sensing target, angle information of a sensing target, Doppler frequency shift information of a sensing target, type information of a sensing target, or classification information of a sensing target. Therefore, sensing of the sensing target is implemented.

The type information of the sensing target is used to indicate the category of the sensing target, for example, to indicate that the sensing target is a building, a tree, a vehicle, or a human. The classification information of the sensing target is used to indicate the classification to which the sensing target belongs, for example, to indicate whether the sensing target is a living organism or a non-living object.

In an embodiment, a frequency domain resource at the first resource location is identical to a frequency domain resource at the second resource location, and a time domain resource at the first resource location is different from a time domain resource at the second resource location. Alternatively, a frequency domain resource at the first resource location is different from a frequency domain resource at the second resource location, and a time domain resource at the first resource location is identical to a time domain resource at the second resource location. Alternatively, a frequency domain resource at the first resource location is identical to a frequency domain resource at the second resource location, a time domain resource at the first resource location is identical to a time domain resource at the second resource location, and at least one of the following resources at the first resource location is different from a corresponding resource at the second resource location: a space domain resource, a code domain resource, or a beam domain resource.

In an embodiment, the complementary sequences are Golay complementary sequences or completely complementary sequences.

When the complementary sequences are Golay complementary sequences, the sequence lengths of the Golay complementary sequences are 32, 64, 128, or 256. The Golay complementary sequences may also be scrambled with a sequence identity (ID). The sequence ID is a physical cell ID or a virtual cell ID.

When the complementary sequences are the completely complementary sequences, autocorrelation function values of the completely complementary sequences at non-zero shifts are zero or differences between autocorrelation function values of the completely complementary sequences at non-zero shifts and autocorrelation function values of the completely complementary sequences at zero shifts are less than -20 dB, for example, -30 dB or -40 dB. Cross-correlation function values of the completely complementary sequences are zero or differences between cross-correlation function values of the completely complementary sequences and autocorrelation function values of the completely complementary sequences at zero shifts are less than -20 dB, for example, -30 dB or -40 dB.

In an ideal state, the completely complementary sequences are defined as follows: assuming that $\{A_1, B_1\}$ is a pair of complementary sequences and $\left\{A_1', B_1'\right\}$ is another pair of complementary sequences, and the sequence length of each sequence $A_1$, $B_1$, $A_1'$, $B_1'$ is $N$. If the following formulas (1) to (3) are satisfied:

$$R_{A_1A_1}(\tau) + R_{B_1B_1}(\tau) = \begin{cases} 2N, \tau = 0 \\ 0, \tau \neq 0 \end{cases} \quad (1)$$

$$R_{A_1'A_1'}(\tau) + R_{B_1'B_1'}(\tau) = \begin{cases} 2N, \tau = 0 \\ 0, \tau \neq 0 \end{cases} \quad (2)$$

$$R_{A_1A_1'}(\tau) + R_{B_1B_1'}(\tau) = 0, \forall \tau \quad (3)$$

$\{A_1, B_1\}$ and $\{A_1', B_1'\}$ form a pair of completely complementary sequences, $R_{A_1A_1}(\tau)$ is the autocorrelation function of the sequence $A_1$, and $R_{A_1A_1'}(\tau)$ is the cross-correlation function of the sequences $A_1$ and $A_1'$. The Formulas (1) and (2) represent the autocorrelation functions of the completely complementary sequences. Formula (3) represents the cross-correlation function of the completely complementary sequences. $\tau$ represents a discrete time offset.

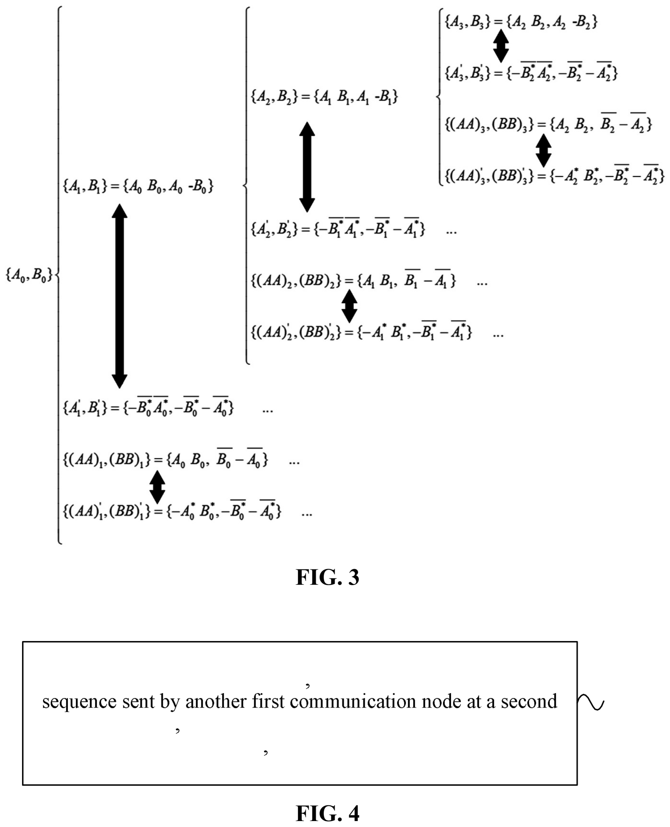

FIG. 3 shows a flowchart of generating completely complementary sequences through a recursive construction method according to an embodiment of the present disclosure. As shown in FIG. 3, in the present disclosure, starting from an initial complementary sequence, a set of completely complementary sequences with a certain quantity and a certain length may be obtained through the recursive construction method, where $\overline{A}$ is an inverse sequence of $A$. It is assumed that $A = (a_0, a_1, a_2, ..., a_{n-1})$, then $\overline{A} = (a_{n-1}, a_{n-2}, ..., a_0)$, and $A^*$ is the conjugate of $A$.

Therefore, the first sensing sequence sent by the first communication node is a completely complementary sequence constructed by the above recursive construction method, or a sequence generated by scrambling a completely complementary sequence with a sequence ID. The sequence ID is the physical cell ID or the virtual cell ID.

In an embodiment, initialization sequences for constructing the completely complementary sequences may be as follows:

If the sequence lengths of the completely complementary sequences are 4:

$$Ga=[-1,-1,1j,-1j]; \text{ and, } Gb=[-1j,-1j,1,-1].$$

If the sequence lengths of the completely complementary sequences are 5:

$$Ga=[1,1j,-1j,-1,1j]; \text{ and, } Gb=[1,1,1,1j,-1j].$$

If the sequence lengths of the completely complementary sequences are 10:

$$Ga=[-1,-1,-1,-1,-1,1,-1,1,1,-1]; \text{ and, } Gb=[-1,-1,1,1,-1,-1,-1,1,-1,1].$$

If the sequence lengths of the completely complementary sequences are 26:

$$Ga=[1,1,1,1,-1,1,1,-1,-1,1,-1,1,-1,1,-1,-1,1,-1,1,1,1,1,-1,-1,1,1,1];$$

and,

$$Gb=[1,1,1,1,-1,1,1,-1,-1,1,-1,1,1,1,1,1,1,-1,1,-1,-1,-1,1,1,-1,-1,-1].$$

If the sequence lengths of the completely complementary sequences are 64:

Ga=[-1,-1,1,-1,1,-1,-1,-1,1,1,-1,1,1,-1,-1,-1,-1,-1,1,-1,1,1,-1,-1,-1,-1,-1,1,1,-1,-1,1,1,1,-1,-1 ,1,-1,1,-1,-1,-1,-1,1,1,-1,1,1,1,-1,-1,- 1,1,1,-1,1,-1,1,1,1,1,1,-1,1,1,-1,-1,-1];

and, Gb=[1,1,-1,1,-1,1,1,1,-1,-1,1,-1,-1,1,1,1,1,1,-1,1,-1,1,1,1,1,1,-1,1,1,-1,-1,-1,-1,-1,1,-1,1,-1,-1,1,1 ,1,-1,1,1,-1,-1,-1,1,1,- 1,1,-1,1,1,1,1,1,-1,1,1,-1,-1,-1].

If the sequence lengths of the completely complementary sequences are 128:

Ga-=[1,1,-1,-1,-1,-1,-1,-1,1,1,-1,1,1,-1,-1,1,1,1,-1,-1,1,1,1,1,1,-1,1,-1,1,-1,1,1,1,-1,-1,1,1,1        ,1,1,1,1,1,-1,1,-1,-1,1,1,1,- 1,1,1,-1,-1,1,1,1,1,-1,1,-1,1,-1,1,1,1,-1,1,1,1,-1,-1,-1,-1,-1,-1,-1,1,-1,1,1,1,-1,-1,1,1,1,1,1,-1,-1,1,1,-1,1,1,1,-1,1,1,-1,1,1,-1,- 1,-1,-1,-1,-1,1,-1,1,1,1,-1,-1,1,1,-1,-1,1,1,1,-1,-1,-1,-1 ,1,-1,1,1,-1,1,1,-1,-1,1].

and, Gb=[-1,-1,1,1,1,1,1,1,1,-1,1,1,-1,-1,1,1,1,-1,-1,-1,1,1,1,-1,-1,-1,-1,-1,1,1,-1,-1,1,1,-1,1,-1,-1,1,1,1,1,-1,-1,-1,-1,-1,  -1,-1,1,1,-1,1,1,1,-1,-1,1,- 1,-1,1,1,-1,-1,-1,-1,1,1,-1,1,1,-1,-1,1,1,1,1,1,-1,-1,-1,-1,-1,-1,-1,1,-1,1,1,1,-1,-1,  1,1,1,-1,-1,1,1,1,1,1,-1,1,-1,-1,1,-1,1,1,1,-1,1,1,1,-1,- 1,-1,-1,-1,-1,1,-1,1,1,1,-1,1,1,-1,1,1,1,-1,-1,-1,-1,1 ,-1,1,1,-1,1,1,-1,-1,1].

Taking the completely complementary sequences with the sequence length being 64 generated by the recursive construction method as an example, two pairs of complementary sequences {A,B} and {A',B'} with the autocorrelation function values being 0 and the cross correlation function values being 0 are as follows:

A=[1,1,1,1,1,-1,1,-1,-1,-1,1,1,1,1,-1,-1,1,1,1,1,-1,-1,1,1,-1,-1,1,1,-1,-1,-1,-1,1,1,-1,1,-1,-1,-1,-1,-1,-1,1,1,-1,1,1,1,1,-1,-1,-1,1,1,- 1,1,1,-1,-1,1,-1,-1,1,1,-1,-1,-1,-1,1,1,-1,1,-1];

B=[1,1,1,1,1,-1,1,-1,-1,-1,1,1,1,1,-1,-1,1,1,1,1,-1,-1,1,1,-1,-1,-1,-1,1,1,-1,1,-1,-1,1,1,1,1,1,1,-1,1,-1,-1,-1      ,-1,1,1,1,1,-1,-1,1,1,-1,- 1,1,1,1,-1,1,1,1,1,-1,1,1,-1,1,-1];

A'=[1,-1,1,-1,1,1,1,1,-1,1,1,1,-1,1,1,1,-1,1,1,1,-1,1,1,1,-1,-1,-1,-1,1,1,-1,1,-1,-1,1,1,1,1,1,1,-1,1,-1,1,1,-1,-1,-1,-1,1,  -1,-1,1,1,-1,-1,1,1,1,1,-1,- 1,1,1,1,-1,-1,-1,1,-1,1,1,1,1,1];

B'=[1,-1,1,-1,1,1,1,1,-1,1,1,1,-1,1,1,1,-1,1,1,1,-1,-1,-1,1,1,-1,1,1,1,1,1,1,-1,1,1,-1,1,1,1,1,1,-1,1,-1,-1,1,1,1,1,-1,1,    1,-1,1,1,1,-1,-1,-1,1,1,- 1,1,-1,-1,1,1,1,-1,1,1,-1,-1,-1,-1,-1];

In an embodiment, the first sensing sequence is a cyclic algorithm new (CAN) sequence, that is, a sequence generated by CAN. The CAN sequence may also be referred to as a sequence generated by a major-minimization (MM) algorithm. The main advantage of using a CAN sequence as the first sensing sequence is that it enables the generation of a considerable number of sequences with excellent autocorrelation properties and good cross-correlation properties.

An initialization sequence of the CAN sequence includes one of the following:

$e^{j*2*\pi*N_{rand}}$, where $N_{rand}$ is a random vector having a length of $N$, $N$ is a sequence length of the CAN sequence; $e^{j*\pi*n2/N}$, where $n \in [0, N-1]$, and $N$ is a sequence length of the CAN sequence; $e^{-j*(2*\pi/M_r)*(m-1)2/2}$, where $m \in [0, N-1]$, and $M_r$ is an even number and $N$ is a sequence length of the CAN sequence; $e^{-j*(2*\pi/M_r)*(m-1)*(m-1-M_r)/2}$, where $m \in [0, N-1]$, and $M_r$ is an even number or an odd number, and $N$ is a sequence length of the CAN sequence; $e^{j*\pi*n*(n+1)/N}$, where $n \in [0, N-1]$, and $N$ is a sequence length of the CAN sequence; initializing the CAN sequence with $e^{j*\pi*n*(n/N-1)}$, where $n \in [0, N-1]$, and $N$ is a sequence length of the CAN sequence; or a Zadoff-Chu sequence.

In an embodiment, the sequence generated through the above initialization manner may be used as the initialization sequence of the CAN sequence. Alternatively, the sequence generated by scrambling the above initialization sequence with the sequence ID may be used as the final initialization sequence of the CAN sequence. The generation of the CAN sequence mainly includes the following operations S1 and S2.

S1: For a given $\widetilde{X}$, $V = \frac{1}{\sqrt{2}} e^{j\arg\left(p^H \widetilde{X}\right)}$ is calculated. $\widetilde{X}$ is a sequence obtained by cascading the initialization sequence with the sequence length of $N$ generated through the above initialization manner, and a zero vector with the sequence length of $N$.

S2: based on the calculated V, $\bar{X} = e^{j\arg(PV)}$ is calculated. S1 and S2 are repeated until a preset stop condition $\|X^{(i)} - X^{(i+1)}\| < \eta$ is satisfied, where $\eta$ is a predefined value, for example, $\eta = 10^{-5}$, and $P$ is a matrix of the Fourier transform.

FIG. 4 shows a flowchart of a sensing sequence receiving method according to an embodiment of the present disclosure. As shown in FIG. 4, the method provided by the present embodiment is applicable to a second communication node. In this example, a first communication node (also referred to as a first communication node equipment or a first node) may be the access network equipment, and a second communication node (also referred to as a second communication node equipment or a second node) may be the access network equipment or the terminal equipment. The method includes S210.

S210: a first sensing sequence sent by a first communication node is received at a first resource location, and a second sensing sequence sent by another first communication node is received at a second resource location. The first sensing sequence is identical to the second sensing sequence, and alternatively, the first sensing sequence and the second sensing sequence form a pair of complementary sequences.

In an embodiment, the first sensing sequence and the second sensing sequence may be sequences generated by scrambling the same sequence using different sequence IDs, or different frames, or different subframes, or different slots, or different symbol indices. Alternatively, the first sensing sequence and the second sensing sequence may be sequences generated by scrambling a pair of complementary sequences using different sequence IDs, or different frames, or different subframes, or different slots, or different symbol indices.

In an embodiment, before the first sensing sequence sent by the first communication node is received at the first resource location, the first communication node is required to establish a communication link with the second communication node. The communication link is established between the first communication node and the second communication node mainly in one of the following two manners:

In a manner 1: when the first communication node is the access network equipment and the second communication node is the access network equipment, the second communication node receives a sensing setup request message sent by the first communication node. The sensing setup request message includes at least one of indication information or index information of a resource location. The indication information is used to indicate whether the sensing sequence is a complementary sequence, and the resource location includes at least one of a frame, a subframe, a time slot, a symbol, a frequency-domain bandwidth location, a frequency-domain resource block, or a frequency-domain subcarrier. The second communication node determines whether to respond to the sensing setup request message according to the processing capacity and processing resource status of the second communication node, and sends a sensing setup feedback message to the first communication node, wherein the sensing setup feedback message is used to indicate whether a sensing setup is successful.

In a manner 2: when the first communication node is the access network equipment and the second communication node is the terminal equipment, the second communication node receives a sensing reception instruction sent by the first communication node. The sensing reception instruction includes at least one of indication information and index information of resource location. The indication information is used to indicate whether the sensing sequence is a complementary sequence, and the resource location includes at least one of a frame, a subframe, a time slot, a symbol, a frequency-domain bandwidth location, a frequency-domain resource block, or a frequency-domain subcarrier.

Through any of the above manners, the communication link is established between the first communication node and the second communication node, so that the second communication node receives the first sensing sequence sent by the first communication node at the first resource location, and sends a sensing result information to the first communication node after receiving the second sensing sequence sent by another first communication node at the second resource location. The sensing result information includes at least one of location information of a sensing target, distance information of a sensing target, speed information of a sensing target, angle information of a sensing target, Doppler frequency shift information of a sensing target, type information of a sensing target, or classification information of a sensing target. Therefore, sensing of the sensing target is implemented.

In an embodiment, a frequency domain resource at the first resource location is identical to a frequency domain resource at the second resource location, and a time domain resource at the first resource location is different from a time domain resource at the second resource location. Alternatively, a frequency domain resource at the first resource location is different from a frequency domain resource at the second resource location, and a time domain resource at the first resource location is identical to a time domain resource at the second resource location. Alternatively, a frequency domain resource at the first resource location is identical to a frequency domain resource at the second resource location, a time domain resource at the first resource location is identical to a time domain resource at the second resource location, and at least one of the following resources at the first resource location is different from a corresponding resource at the second resource location: a space domain resource, a code domain resource, or a beam domain resource.

In an embodiment, the complementary sequences are Golay complementary sequences or completely complementary sequences.

When the complementary sequences are Golay complementary sequences, the sequence lengths of the Golay complementary sequences are 32, 64, 128 or 256. The Golay complementary sequences may also be scrambled with a sequence ID. The sequence ID is a physical cell ID or a virtual cell ID.

When the complementary sequences are the completely complementary sequences, autocorrelation function values of the completely complementary sequences at non-zero shifts are zero, or differences between autocorrelation function values of the completely complementary sequences at non-zero shifts and autocorrelation function values of the completely complementary sequences at zero shifts are less than -20 dB. Cross-correlation function values of the completely complementary sequences are zero, or differences between cross-correlation function values of the completely complementary sequences and autocorrelation function values of the completely complementary sequences at zero shifts are less than -20 dB.

In an embodiment, the first sensing sequence is a CAN sequence.

The initialization sequence of the CAN sequence includes one of the following:
$e^{j*2*\pi*N_{rand}}$, where $N_{rand}$ is a random vector having a length of $N$, $N$ is a sequence length of the CAN sequence; $e^{j*\pi*n^2/N}$, where $n \in [0, N-1]$, and $N$ is a sequence length of the CAN sequence; $e^{-j*(2*\pi/M_r)*(m-1)^2/2}$, where $m \in [0, N-1]$, and $M_r$ is an even number and $N$ is a sequence length of the CAN sequence; $e^{-j*(2*\pi/M_r)*(m-1)*(m-1-M_r)/2}$, where $m \in [0, N-1]$, and $M_r$ is an even number or an odd number, and $N$ is a sequence length of the CAN sequence; $e^{j*\pi*n*(n+1)/N}$, where $n \in [0, N-1]$, and $N$ is a sequence length of the CAN sequence; $e^{j*\pi*n*(n/N-1)}$, where $n \in [0, N-1]$, and $N$ is a sequence length of the CAN sequence; or a Zadoff-Chu sequence.

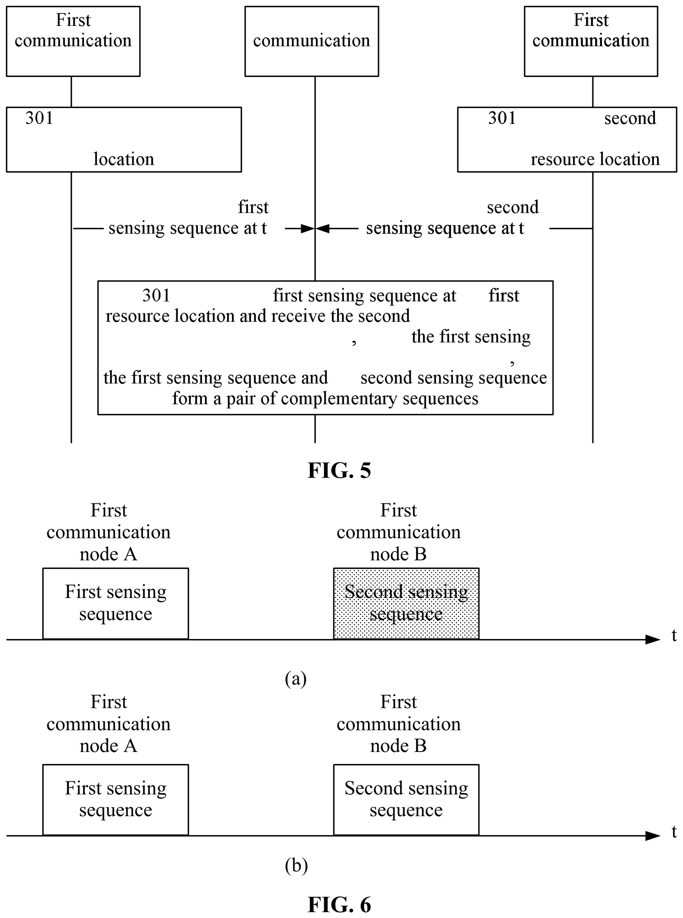

FIG. 5 shows an interactive schematic diagram of a sensing sequence transmission method according to an embodiment of the present disclosure. As shown in FIG. 5, the sensing system includes a first communication node A, a first communication node B, and a second communication node. The first communication node A, the first communication node B, and the second communication node are each the access network equipment. Assuming that the first communication node A and the first communication node B establish communication links with the second communication node respectively, the method of establishing communication links may refer to the description of the above embodiments, and the sensing sequence transmission method includes S301-S305.

S301: a first sensing sequence and a first resource location are acquired by the first communication node A.

S302: the first sensing sequence is sent to the second communication node by the first communication node A at the first resource location.

S303: a second sensing sequence and a second resource location are acquired by the first communication node B.

S304: the second sensing sequence is sent to the second communication node by the first communication node B at the second resource location.

S305: the first sensing sequence sent by the first communication node is received at the first resource location and the second sensing sequence sent by another first communication node is received at the second resource location. The first sensing sequence is identical to the second sensing sequence, and alternatively the first sensing sequence and the second sensing sequence form a pair of complementary sequences.

In an embodiment, the first sensing sequence and the second sensing sequence may be sequences generated by scrambling the same sequence using different sequence IDs, or different frames, or different subframes, or different slots, or different symbol indices. Alternatively, the first sensing sequence and the second sensing sequence may be sequences generated by scrambling a pair of complementary sequences using different sequence IDs, or different frames, or different subframes, or different slots, or different symbol indices.

In an embodiment, a frequency domain resource at the first resource location is identical to a frequency domain resource at the second resource location, and a time domain resource at the first resource location is different from a time domain resource at the second resource location. Alternatively, a frequency domain resource at the first resource location is different from a frequency domain resource at the second resource location, and a time domain resource at the first resource location is identical to a time domain resource at the second resource location. Alternatively, a frequency domain resource at the first resource location is identical to a frequency domain resource at the second resource location, a time domain resource at the first resource location is identical to a time domain resource at the second resource location, and at least one of the following resources at the first resource location is different from a corresponding resource at the second resource location: a space domain resource, a code domain resource, or a beam domain resource.

FIG. 6 is a schematic diagram illustrating an embodiment in which a frequency domain resource at a first resource location is identical to a frequency domain resource at a second resource location, and a time domain resource at the first resource location. As shown in FIG. 6, FIG. 6 (a) shows a case where the first sensing sequence and the second sensing sequence form a pair of complementary sequences. FIG. 6 (b) shows a case where the first sensing sequence is identical to the second sensing sequence. For the case where the first sensing sequence and the second sensing sequence form the pair of complementary sequences, the second communication node exhibits good autocorrelation performance. However, the second communication node needs to wait for the arrival of the other half of the complementary sequences before performing signal autocorrelation detection on the other half of the complementary sequences.

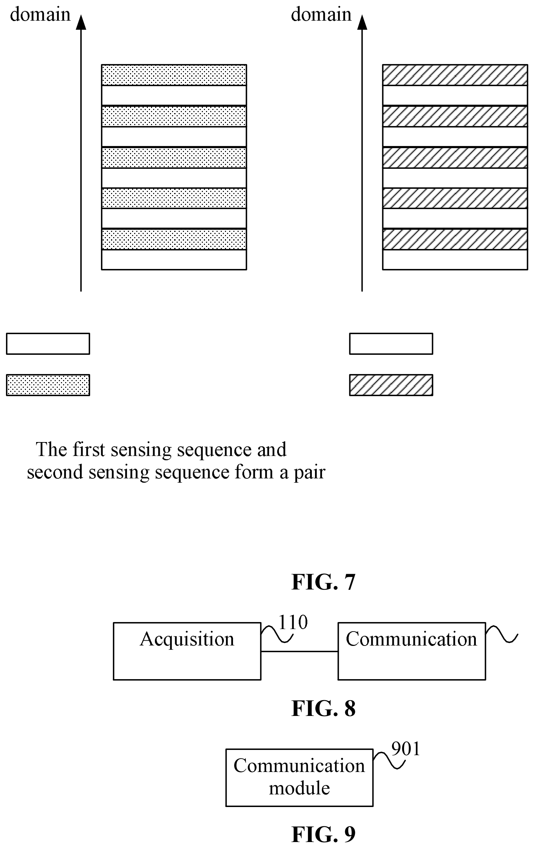

FIG. 7 is a schematic diagram illustrating an embodiment in which a frequency domain resource at a first resource location is different from a frequency domain resource at a second resource location, and a time domain resource at the first resource location is identical to a time domain resource at the second resource location. As shown in FIG. 7, FIG. 7 (a) shows a case where the first sensing sequence and the second sensing sequence form a pair of complementary sequences. FIG. 7 (b) shows a case where the first sensing sequence is identical to the second sensing sequence. Compared with the case shown in FIG. 6, the second communication node does not need to wait for a period of time to perform signal autocorrelation detection on the other half of the complementary sequences. However, since the OFDM system is extremely sensitive to frequency offset, even a small frequency offset can destroy the orthogonality of the frequency domain subcarriers.

FIG. 8 shows a schematic structural diagram of a sensing sequence sending apparatus according to an embodiment of the present disclosure. The sensing sequence sending apparatus may be configured in the first communication node. As shown in FIG. 8, the sensing sequence sending apparatus includes an acquisition module 801 and a communication module 802.

The acquisition module 801 is configured to acquire a first sensing sequence and a first resource location. The communication module 802 is configured to send the first sensing sequence to the second communication node at the first resource location. The first sensing sequence is identical to the second sensing sequence, and alternatively, the first sensing sequence and the second sensing sequence form the pair of complementary sequences. The second sensing sequence is a sensing sequence sent to the second communication node by another first communication node at the second resource location.

The sensing sequence sending apparatus provided by the present embodiment is to implement the sensing sequence sending method of the embodiment shown in FIG. 2, and the implementation principle and technical effect of the sensing sequence sending apparatus provided by the present embodiment are similar to those of the above embodiment, and will not be repeated here.

In an embodiment, a frequency domain resource at the first resource location is identical to a frequency domain resource at the second resource location, and a time domain resource at the first resource location is different from a time domain resource at the second resource location. Alternatively, a frequency domain resource at the first resource location is different from a frequency domain resource at the second resource location, and a time domain resource at the first resource location is identical to a time domain resource at the second resource location. Alternatively, a frequency domain resource at the first resource location is identical to a frequency domain resource at the second resource location, a time domain resource at the first resource location is identical to a time domain resource at the second resource location, and at least one of the following resources at the first resource location is different from a corresponding resource at the second resource location: a space domain resource, a code domain resource, or a beam domain resource.

In an embodiment, the acquisition module 801 is configured to acquire an orthogonal frequency division multiplexed (OFDM) signal and perform inverse fast Fourier transform (IFFT) or inverse discrete Fourier transform (IDFT) on the OFDM signal to acquire the first sensing sequence.

In an embodiment, the communication module 802 is further configured to send the sensing setup request message to the second communication node. The sensing setup request message includes at least one of indication information or index information of resource location. The indication information is used to indicate whether the sensing sequence is the complementary sequence, and the resource location includes at least one of a frame, a subframe, a time slot, a symbol, a frequency-domain bandwidth location, a frequency-domain resource block, or a frequency-domain subcarrier. Moreover, the communication module 802 is further configured to receive the sensing setup feedback message sent by the second communication node. The sensing setup feedback message is used to indicate whether a sensing setup is successful.

In an embodiment, the communication module 802 is further configured to send the sensing reception instruction to the second communication node. The sensing reception instruction includes at least one of indication information or index information of the resource location. The indication information is used to indicate whether the sensing sequence is the complementary sequence, and the resource location includes at least one of a frame, a subframe, a time slot, a symbol, a frequency-domain bandwidth location, a frequency-domain resource block, or a frequency-domain subcarrier.

In an embodiment, the communication module 802 is further configured to receive the sensing result information sent by the second communication node after sending the first sensing sequence to the second communication node at the first resource location. The sensing result information includes at least one of location information of the sensing target, distance information of the sensing target, speed information of the sensing target, angle information of the sensing target, Doppler frequency shift information of the sensing target, type information of the sensing target, or classification information of the sensing target.

In an embodiment, the complementary sequences are Golay complementary sequences or completely complementary sequences.

In an embodiment, the sequence lengths of the Golay complementary sequences are 32, 64, 128, or 256.

In an embodiment, the Golay complementary sequences are scrambled with the sequence ID. The sequence ID is the physical cell ID or the virtual cell ID.

In an embodiment, autocorrelation function values of the completely complementary sequences at non-zero shifts are zero, or differences between autocorrelation function values of the completely complementary sequences at non-zero shifts and autocorrelation function values of the completely complementary sequences at zero shifts are less than -20 dB. Cross-correlation function values of the completely complementary sequences are zero, or differences between cross-correlation function values of the completely complementary sequences and autocorrelation function values of the completely complementary sequences at zero shifts are less than -20 dB.

In an embodiment, the first sensing sequence is a CAN sequence.

In an embodiment, the initialization sequence of the CAN sequence includes one of the following:

$e^{j*2*\pi*Nrand}$, where $N_{rand}$ is a random vector having a length of $N$, $N$ is a sequence length of the CAN sequence; $e^{j*\pi*n2/N}$, where $n \in [0, N-1]$, and $N$ is a sequence length of the CAN sequence; $e^{-j*(2*\pi/M_r)*(m-1)2/2}$, where $m \in [0, N-1]$, and $M_r$ is an even number and $N$ is a sequence length of the CAN sequence; $e^{-j*(2*\pi/Mr)*(m-1)*(m-1-Mr)/2}$, where $m \in [0, N-1]$, and $M_r$ is an even number or an odd number, and $N$ is a sequence length of the CAN sequence; $e^{j*\pi*n*(n+1)/N}$, where $n \in [0, N-1]$, and $N$ is a sequence length of the CAN sequence; $e^{j*\pi*n*(n/N-1)}$, where $n \in [0, N-1]$, and $N$ is a sequence length of the CAN sequence; or a Zadoff-Chu sequence.

FIG. 9 shows a schematic structural diagram of a sensing sequence receiving apparatus according to an embodiment of the present disclosure. The sensing sequence receiving apparatus may be configured in the second communication node. As shown in FIG. 9, the sensing sequence receiving apparatus includes a communication module 901.

The communication module 901 is configured to receive the first sensing sequence sent by the first communication node at the first resource location and receive the second sensing sequence sent by another first communication node at the second resource location. The first sensing sequence is identical to the second sensing sequence, or the first sensing sequence and the second sensing sequence form a pair of complementary sequences.

The sensing sequence receiving apparatus provided in the present embodiment is to implement the sensing sequence receiving method as the embodiments shown in FIG. 4. The implementation principle and technical effect of the sensing sequence receiving apparatus provided in the present embodiment are similar to those in the above embodiment, and will not be repeated here.

In an embodiment, a frequency domain resource at the first resource location is identical to a frequency domain resource at the second resource location, and a time domain resource at the first resource location is different from a time domain resource at the second resource location. Alternatively, a frequency domain resource at the first resource location is different from a frequency domain resource at the second resource location, and a time domain resource at the first resource location is identical to a time domain resource at the second resource location. Alternatively, a frequency domain resource at the first resource location is identical to a frequency domain resource at the second resource location, a time domain resource at the first resource location is identical to a time domain resource at the second resource location, and at least one of the following resources at the first resource location is different from a corresponding resource at the second resource location: a space domain resource, a code domain resource, or a beam domain resource.

In an embodiment, the communication module 901 is further configured to receive the sensing setup request message sent by a first communication node. The sensing setup request message includes at least one of indication information or index information of the resource location. The indication information is used to indicate whether the sensing sequence is the complementary sequence, and the resource location includes at least one of a frame, a subframe, a time slot, a symbol, a frequency-domain bandwidth location, a frequency-domain resource block, or a frequency-domain subcarrier. The communication module 901 is further configured to send the sensing setup feedback message to the first communication node. The sensing setup feedback message is used to indicate whether a sensing setup is successful.

In an embodiment, the communication module 901 is further configured to receive the sensing reception instruction sent by the first communication node. The sensing reception instruction includes at least one of indication information or index information of the resource location. The indication information is used to indicate whether the sensing sequence is the complementary sequence, and the resource location includes at least one of a frame, a subframe, a time slot, a symbol, a frequency-domain bandwidth location, a frequency-domain resource block, or a frequency-domain subcarrier.

In an embodiment, the communication module 901 is further configured to receive the first sensing sequence sent by the first communication node at the first resource location, and send sensing result information to the first communication node after receiving the second sensing sequence sent by another first communication node at the second resource location. The sensing result information includes at least one of location information of the sensing target, distance information of the sensing target, speed information of the sensing target, angle information of the sensing target, Doppler frequency shift information of the sensing target, type information of the sensing target, or classification information of the sensing target.

In an embodiment, the complementary sequences are Golay complementary sequences or completely complementary sequences.

In an embodiment, the sequence lengths of the Golay complementary sequences are 32, 64, 128, or 256.

In an embodiment, the Golay complementary sequences are scrambled with the sequence ID. The sequence ID is the physical cell ID or the virtual cell ID.

In an embodiment, autocorrelation function values of the completely complementary sequences at non-zero shifts are zero, or differences between autocorrelation function values of the completely complementary sequences at non-zero shifts and autocorrelation function values of the completely complementary sequences at zero shifts are less than -20 dB. Cross-correlation function values of the completely complementary sequences are zero, or differences between cross-correlation function values of the completely complementary sequences and autocorrelation function values of the completely complementary sequences at zero shifts are less than -20 dB.

In an embodiment, the first sensing sequence is a CAN sequence.

In an embodiment, the initialization sequence of the CAN sequence includes one of the following:

$e^{j*2*\pi*N_{rand}}$, where $N_{rand}$ is a random vector having a length of $N$, $N$ is a sequence length of the CAN sequence; $e^{j*\pi*n^2/N}$, where $n \in [0, N-1]$, and $N$ is a sequence length of the CAN sequence; $e^{-j*(2*\pi/M_r)*(m-1)^2/2}$, where $m \in [0, N-1]$, and $M_r$ is an even number and $N$ is a sequence length of the CAN sequence; $e^{-j*(2*\pi/M_r)*(m-1)*(m-1-M_r)/2}$, where $m \in [0, N-1]$, and $M_r$ is an even number or an odd number, and $N$ is a sequence length of the CAN sequence; $e^{j*\pi*n*(n+1)/N}$, where $n \in [0, N-1]$, and $N$ is a sequence length of the CAN sequence; $e^{j*\pi*n*(n/N-1)}$, where $n \in [0, N-1]$, and $N$ is a sequence length of the CAN sequence; or a Zadoff-Chu sequence.

The embodiments of the present disclosure further provide a communication node. The communication node includes a processor configured to implement the method provided by any embodiment of the present disclosure when executing a computer program. The communication node may be a first communication node or a second communication node. The first communication node includes the processor configured to implement the sensing sequence sending method provided by any embodiment of the present disclosure when executing the computer program. The second communication node includes the processor configured to implement the sensing sequence receiving method provided by any embodiment of the present disclosure when executing the computer program. In an example, the first communication node may be the access network equipment provided by any embodiment of the present disclosure, such as the base station, and the present disclosure does not limit thereto. The second communication node may be the terminal equipment or the access network equipment provided by any embodiment of the present disclosure, and the present disclosure does not limit thereto.

In an example, the following embodiments respectively provide structural schematic diagrams of a base station and a UE, each of which may be used as the communication node.

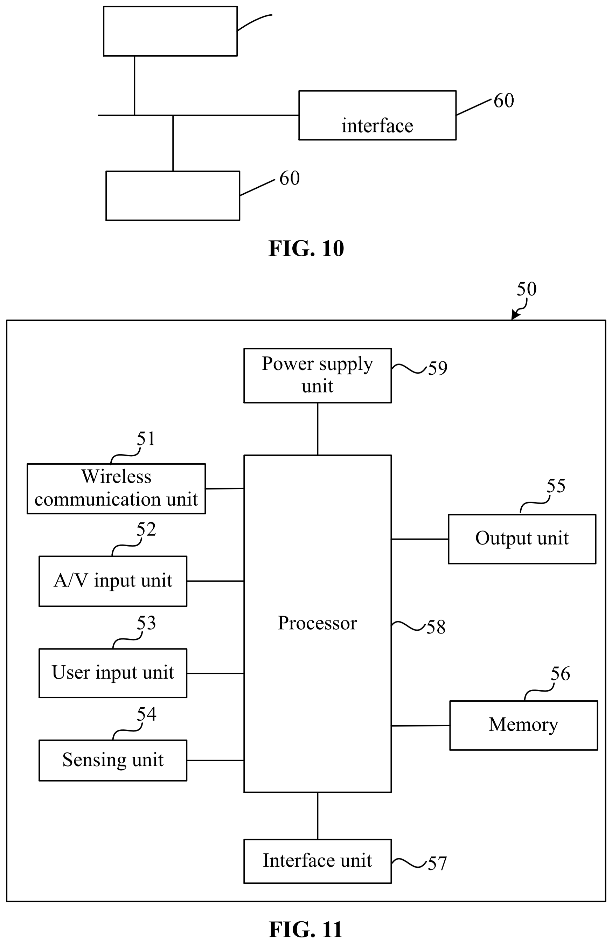

FIG. 10 shows a schematic structural diagram of a base station according to an embodiment of the present disclosure. As shown in FIG. 10, the base station includes a processor 60, a memory 61, and a communication interface 62. The quantity of processors 60 in the base station may be one or more, and one processor 60 is taken as an example in FIG. 10. The processor 60, the memory 61 and the communication interface 62 in the base station may be connected through a bus or other means, and a connection through the bus is taken as an example in FIG. 10. The bus refers to one or more of several bus structures, including memory bus or memory controller, peripheral bus, accelerated graphics port, processor or local bus using any of several bus structures.

The memory 61, as a computer-readable storage medium, may be configured to store software programs, computer-executable programs, and modules, such as program instructions/modules corresponding to the method in the embodiment of the present disclosure. The processor 60 runs software programs, instructions, and modules stored in the memory 61 to execute at least one functional application or data processing of the base station, thereby implementing any one of the above methods.

The memory 61 may include a program storage region and a data storage region. The program storage region may store an operating system and at least one application required for a function. The data storage region may store data created according to the use of the terminal, etc. Furthermore, the memory 61 may include a high-speed random access memory, and may further include a non-volatile memory, such as at least one magnetic disk memory, a flash memory, or other non-volatile solid-state memory. In some examples, the memory 61 may include memories remotely located with respect to the processor 60, and these remote memories may be connected to a base station through a network. Examples of the above networks include, but are not limited to, the Internet, an intranet, a network, a mobile communication network, and combinations thereof.

The communication interface 62 may be configured to receive and send data.

FIG. 11 shows a schematic structural diagram of a UE according to an embodiment of the present disclosure. The UE may be implemented in various forms. In the present disclosure, the UE may include, but is not limited to, mobile terminal equipment such as a mobile phone, a smartphone, a notebook computer, a digital broadcast receiver, a personal digital assistant (PDA), a tablet computer (PAD), a portable media player (PMP), a navigation device, a vehicle-mounted terminal, a vehicle-mounted display terminal, and a vehicle-mounted electronic rearview mirror, as well as fixed terminal equipment such as a digital television (TV) and a desktop computer.

As shown in FIG. 11, the UE 50 may include a wireless communication unit 51, an audio/video (A/V) input unit 52, a user input unit 53, a sensing unit 54, an output unit 55, a memory 56, an interface unit 57, a processor 58, a power supply unit 59, etc. FIG. 11 shows a UE including various components, but it should be understood that the implementation of all illustrated components is not required. Alternatively, the UE 50 may be implemented with more or fewer components.

In the present embodiment, the wireless communication unit 51 enables radio communication between the UE 50 and a base station or the network. The A/V input unit 52 is configured to receive audio or video signals. The user input unit 53 may generate key input data based on commands entered by the user to control various operations of the UE 50. The sensing unit 54 detects the current state of the UE 50, the position of the UE 50, the presence or absence of user touch input, the orientation of the UE 50, the acceleration or deceleration and movement direction of the UE 50, and the like, and generates commands or signals for controlling the operations of the UE 50. The interface unit 57 serves as an interface through which at least one external device can be connected to the UE 50. The output unit 55 is configured to provide output signals in a visual, audio, and/or tactile manner. The memory 56 may store software programs or other instructions for processing and controlling operations executed by the processor 58, or may temporarily store data that has been output or is to be output. The memory 56 may include at least one type of storage medium. Moreover, the UE 50 may cooperate with a network storage device that performs the storage function of the memory 56 through a network connection. The processor 58 generally controls the overall operation of the UE 50. Under the control of the processor 58, the power supply unit 59 receives external or internal power and provides appropriate power for operating various elements and components.

The processor 58 executes at least one functional application and data processing by running the program stored in the memory 56, for example, to implement the method provided by any embodiment of the present disclosure.

The embodiment of the present disclosure further provides a computer-readable storage medium, and a computer program is stored on the computer-readable storage medium. When the computer program is executed by a processor, the method provided by any embodiment of the present disclosure is implemented.

In the embodiment of the present disclosure, the computer storage medium may include any combination of one or more computer-readable media. A computer-readable medium may be a computer-readable signal medium or a computer-readable storage medium. The computer-readable storage medium may include, for example, but is not limited to, an electrical, magnetic, optical, electromagnetic, infrared, or semiconductor system, device, or apparatus, or any combination thereof. Computer-readable storage media include (without limitation) electrical connections having one or more wires, portable computer disks, hard disks, random access memory (RAM), read-only memory (ROM), electrically erasable programmable read-only memory (EEPROM), flash memory, optical fibers, compact disc read-only memory (CD-ROM), optical storage devices, magnetic storage devices, or any suitable combination thereof. In the present disclosure, a computer-readable storage medium may be any tangible medium containing or storing a program, and the program may be used by, or in conjunction with, an instruction execution system, device, or apparatus.

The computer-readable signal medium may include a data signal propagated in baseband or as part of a carrier wave, and the data signal carries computer-readable program code. The propagated data signal may take various forms, including but not limited to an electromagnetic signal, an optical signal, or any suitable combination thereof. The computer-readable signal medium may also be any computer-readable medium other than the computer-readable storage medium. The computer-readable medium may send, propagate, or transmit the program for use by or in conjunction with the instruction execution system, device, or equipment.

The program code included in the computer-readable medium may be transmitted through any appropriate medium, including but not limited to wireless, wire, optical cable, radio frequency (RF), etc., or any appropriate combination thereof.

The computer program code for performing that operation of the present disclosure may be written in one or more programming languages or a combination of multiple programming languages, including object-oriented programming languages (such as Java, Smalltalk, C++, Ruby, Go) and conventional procedural programming languages (such as "C" language or similar programming languages). The program code may be entirely executed on the user's computer, partially executed on the user's computer, executed as a standalone software package, partially executed on the user's computer and partially executed on a remote computer, or entirely executed on a remote computer or server. In a case involving a remote computer, the remote computer may be connected to a user computer through any type of network, including a local area network (LAN) or a wide area network (WAN), or may be connected to an external computer (for example, through the Internet using an Internet service provider).

It will be understood by those skilled in the art that the term user equipment covers any appropriate type of wireless user equipment, such as a mobile phone, a portable data processing device, a portable web browser, or a vehicle-mounted mobile station.

Generally, various embodiments of the present disclosure may be implemented in hardware or dedicated circuits, software, logic, or any combination thereof. For example, some aspects may be implemented in hardware, while other aspects may be implemented in firmware or software that can be executed by a controller, microprocessor, or other computing device, although the present disclosure is not limited thereto.

Embodiments of the present disclosure may be implemented by executing computer program instructions through a data processor of a mobile device, for example, in a processor entity, or through hardware, or through a combination of software and hardware. The computer program instructions may be assembly instructions, instruction set architecture (ISA) instructions, machine instructions, machine-related instructions, microcode, firmware instructions, state-setting data, or source code or object code written in any combination of one or more programming languages.

The block diagram of any logic flow in the drawings of the present disclosure may represent program operation, or may represent an interconnected logic circuit, a module, and a function, or may represent the combination of a program operation and a logic circuit, a module, and a function. The computer program may be stored in memory. The memory may be of any type suitable for the local technical environment and may be implemented using any suitable data storage technology, such as, but not limited to, read-only memory (ROM), random access memory (RAM), optical memory device and systems (digital versatile disk (DVD) or compact disk (CD)), etc. The computer-readable media may include non-transitory storage media. The data processor may be any type suitable for the local technical environment, such as but not limited to a general-purpose computer, a special-purpose computer, a microprocessor, a digital signal processor (DSP), an application-specific integrated circuit (ASIC), a field-programmable gate array (FPGA), and a processor based on a multi-core processor architecture.

**Claims**

1. A sensing sequence sending method, being applied to a first communication node and comprising:

   acquiring a first sensing sequence and a first resource location; and
   sending the first sensing sequence to a second communication node at the first resource location, wherein the first sensing sequence is identical to a second sensing sequence or the first sensing sequence and a second sensing sequence form a pair of complementary sequences, and the second sensing sequence is a sensing sequence sent to the second communication node by another first communication node at a second resource location.

2. The sensing sequence sending method according to claim 1, wherein a frequency domain resource at the first resource location is identical to a frequency domain resource at the second resource location, and a time domain resource at the first resource location is different from a time domain resource at the second resource location; or,

   a frequency domain resource at the first resource location is different from a frequency domain resource at the second resource location, and a time domain resource at the first resource location is identical to a time domain resource at the second resource location; or,
   a frequency domain resource at the first resource location is identical to a frequency domain resource at the second resource location, a time domain resource at the first resource location is identical to a time domain resource at the second resource location, and at least one of the following resources at the first resource location is different from a corresponding resource at the second resource location: a space domain resource, a code domain resource, or a beam domain resource.

3. The sensing sequence sending method according to claim 1, wherein acquiring the first sensing sequence comprises:

   acquiring an orthogonal frequency division multiplexing, OFDM, signal; and
   performing inverse fast Fourier transform, IFFT, or inverse discrete Fourier transform, IDFT, on the OFDM signal to acquire the first sensing sequence.

4. The sensing sequence sending method according to claim 1, further comprising:

   sending a sensing setup request message to the second communication node, wherein the sensing setup request message comprises at least one of indication information or index information of a resource location, wherein the indication information is used to indicate whether a sensing sequence is a complementary sequence, and the resource location comprise at least one of a frame, a subframe, a time slot, a symbol, a frequency-domain bandwidth location, a frequency-domain resource block, or a frequency-domain subcarrier; and
   receiving a sensing setup feedback message sent by the second communication node, wherein the sensing setup feedback message is used to indicate whether a sensing setup is successful.

5. The sensing sequence sending method according to claim 1, further comprising:
   sending a sensing reception instruction to the second communication node, wherein the sensing reception instruction comprises at least one of indication information or index information of a resource location, wherein the indication information is used to indicate whether a sensing sequence is a complementary sequence, and the resource location comprises at least one of a frame, a subframe, a time slot, a symbol, a frequency-domain bandwidth location, a frequency-domain resource block, or a frequency-domain subcarrier.

6.  The sensing sequence sending method according to claim 4 or claim 5, after sending the first sensing sequence to the second communication node at the first resource location, further comprising:
    receiving sensing result information sent by the second communication node, wherein the sensing result information comprises at least one of position information of a sensing target, distance information of a sensing target, speed information of a sensing target, angle information of a sensing target, Doppler frequency shift information of a sensing target, type information of a sensing target, or classification information of a sensing target.

7.  The sensing sequence sending method according to claim 1, wherein the complementary sequences are Golay complementary sequences or completely complementary sequences.

8.  The sensing sequence sending method according to claim 7, wherein sequence lengths of the Golay complementary sequences are 32, 64, 128 or 256.

9.  The sensing sequence sending method according to claim 8, wherein the Golay complementary sequences are scrambled with a sequence identity, ID, and the sequence ID is a physical cell ID or a virtual cell ID.

10. The sensing sequence sending method according to claim 7, wherein autocorrelation function values of the completely complementary sequences at non-zero shifts are zero or differences between autocorrelation function values of the completely complementary sequences at non-zero shifts and autocorrelation function values of the completely complementary sequences at zero shifts are less than -20 dB, and wherein cross-correlation function values of the completely complementary sequences are zero or differences between cross-correlation function values of the completely complementary sequences and autocorrelation function values of the completely complementary sequences at zero shifts are less than -20 dB.

11. The sensing sequence sending method according to claim 1, wherein the first sensing sequence is a cyclic algorithm new, CAN, sequence.

12. The sensing sequence sending method according to claim 11, wherein an initialization sequence of the CAN sequence comprises one of the following:

$$e^{j*2*\pi*N_{rand}},$$

wherein $N_{rand}$ is a random vector having a length of $N$, $N$ is a sequence length of the CAN sequence;

$$e^{j*\pi*n^2/N},$$

wherein $n \in [0, N\text{-}1]$, and $N$ is a sequence length of the CAN sequence;

$$e^{-j*(2*\pi/M_r)*(m-1)^2/2},$$

wherein $m \in [0, N\text{-}1]$, and $M_r$ is an even number and $N$ is a sequence length of the CAN sequence;

$$e^{-j*(2*\pi/M_r)*(m-1)*(m-1-M_r)/2},$$

wherein $m \in [0, N\text{-}1]$, and $M_r$ is an even number or an odd number, and $N$ is a sequence length of the CAN sequence;

$$e^{j*\pi*n*(n+1)/N},$$

wherein $n \in [0, N\text{-}1]$, and $N$ is a sequence length of the CAN sequence;

$$e^{j*\pi*\text{n}*(n/N-1)},$$

wherein $n \in [0, N-1]$, and $N$ a sequence length of the CAN sequence; or a Zadoff-Chu sequence.

13. A sensing sequence receiving method, being applied to a second communication node and comprising:
receiving a first sensing sequence sent by a first communication node at a first resource location and receiving a second sensing sequence sent by another first communication node at a second resource location, wherein the first sensing sequence is identical to the second sensing sequence, or the first sensing sequence and the second sensing sequence form a pair of complementary sequences.

14. The sensing sequence receiving method according to claim 13, wherein a frequency domain resource at the first resource location is identical to a frequency domain resource at the second resource location, and a time domain resource at the first resource location is different from a time domain resource at the second resource location; or,

a frequency domain resource at the first resource location is different from a frequency domain resource at the second resource location, and a time domain resource at the first resource location is identical to a time domain resource at the second resource location; or,
a frequency domain resource at the first resource location is identical to a frequency domain resource at the second resource location, a time domain resource at the first resource location is identical to a time domain resource at the second resource location, and at least one of the following resources at the first resource location is different from a corresponding resource at the second resource location: a space domain resource, a code domain resource, or a beam domain resource.

15. The sensing sequence receiving method according to claim 13, further comprising:

receiving a sensing setup request message sent by the first communication node, wherein the sensing setup request message comprises at least one of indication information or index information of a resource location, wherein the indication information is used to indicate whether a sensing sequence is a complementary sequence, and the resource location comprise at least one of a frame, a subframe, a time slot, a symbol, a frequency-domain bandwidth location, a frequency-domain resource block, or a frequency-domain subcarrier; and
sending a sensing setup feedback message to the first communication node, wherein the sensing setup feedback message is used to indicate whether a sensing setup is successful.

16. The sensing sequence receiving method according to claim 13, further comprising:
receiving a sensing reception instruction sent by the first communication node, wherein the sensing reception instruction comprises at least one of indication information or index information of a resource location, wherein the indication information is used to indicate whether a sensing sequence is a complementary sequence, and the resource location comprises at least one of a frame, a subframe, a time slot, a symbol, a frequency-domain bandwidth location, a frequency-domain resource block, or a frequency-domain subcarrier.

17. The sensing sequence receiving method according to claim 15 or claim 16, after receiving the first sensing sequence sent by the first communication node at the first resource location and receiving the second sensing sequence sent by the another first communication node at the second resource location, further comprising:
sending sensing result information to the first communication node, wherein the sensing result information comprises at least one of position information of a sensing target, distance information of a sensing target, speed information of a sensing target, angle information of a sensing target, Doppler frequency shift information of a sensing target, type information of a sensing target, or classification information of a sensing target.

18. The sensing sequence receiving method according to claim 13, wherein the complementary sequence are Golay complementary sequences or completely complementary sequences.

19. The sensing sequence receiving method according to claim 18, wherein sequence lengths of the Golay complementary sequences are 32, 64, 128 or 256.

20. The sensing sequence receiving method according to claim 19, wherein the Golay complementary sequences are scrambled with a sequence identity, ID, and the sequence ID is a physical cell ID or a virtual cell ID.

21. The sensing sequence receiving method according to claim 18, wherein autocorrelation function values of the completely complementary sequences at non-zero shifts are zero or differences between autocorrelation function values of the completely complementary sequencess at non-zero shifts and autocorrelation function values of the completely complementary sequencess at zero shifts are less than -20 dB, and wherein cross-correlation function values of the completely complementary sequences are zero or differences between cross-correlation function values of the completely complementary sequences and autocorrelation function values of the completely complementary sequences at zero shifts are less than -20 dB.

22. The sensing sequence receiving method according to claim 13, wherein the first sensing sequence is a cyclic algorithm new, CAN, sequence.

23. The sensing sequence receiving method according to claim 22, wherein an initialization sequence of the CAN sequence comprises one of the following:

$$e^{j*2*\pi*N_{rand}},$$

wherein $N_{rand}$ is a random vector having a length of $N$, $N$ is a sequence length of the CAN sequence;

$$e^{j*\pi*n^2/N},$$

wherein $n \in [0, N-1]$, and N is a sequence length of the CAN sequence;

$$e^{-j*(2*\pi/M_r)*(m-1)^2/2},$$

wherein $m \in [0, N-1]$, and $M_r$ is an even number and $N$ is a sequence length of the CAN sequence;

$$e^{-j*(2*\pi/M_r)*(m-1)*(m-1-M_r)/2},$$

wherein $m \in [0, N-1]$, and $M_r$ an even number or an odd number, and N is a sequence length of the CAN sequence;

$$e^{j*\pi*n*(n+1)/N},$$

wherein $n \in [0, N-1]$, and $N$ is a sequence length of the CAN sequence;

$$e^{j*\pi*n*(n/N-1)},$$

wherein $n \in [0, N-1]$, and $N$ is a sequence length of the CAN sequence; or a Zadoff-Chu sequence.

24. A first communication node, comprising a processor, wherein the processor is configured to implement the sensing sequence sending method according to any one of claims 1 to 12 when executing a computer program.

25. A second communication node, comprising a processor, wherein the processor is configured to implement the sensing sequence receiving method according to any one of claims 13 to 23 when executing a computer program.

26. A sensing system, comprising the second communication node according to claim 25, at least two first communication nodes according to claim 24, and a scatterer.

27. A computer-readable storage medium storing a computer program, wherein when executed by a processor, the computer program implements the sensing sequence sending method according to any one of claims 1 to 12 or the sensing sequence receiving method according to any one of claims 13 to 23.

110 First communication node A

Second communication node 120

110 First communication node B

◯ Scatterer

◀- - -▶ Sensing channel

◀——▶ Communication link

**FIG. 1**

Acquir 110

the , where the first sensing sequence is identical to the first sensing sequence and sensing sequence form a pair of complementary sequences, second sensing sequence is a sensing sequence sent to the second by another first communication node at a second 110

**FIG. 2**

$$\{A_0, B_0\} \begin{cases} \\ \{A_1, B_1\} = \{A_0\ B_0, A_0\ -B_0\} \begin{cases} \{A_2, B_2\} = \{A_1\ B_1, A_1\ -B_1\} \begin{cases} \{A_3, B_3\} = \{A_2\ B_2, A_2\ -B_2\} \\ \\ \{A_3', B_3'\} = \{-\overline{B_2^*\ A_2^*}, -\overline{B_2^*} - \overline{A_2^*}\} \\ \\ \{(AA)_3, (BB)_3\} = \{A_2\ B_2, \overline{B_2} - \overline{A_2}\} \\ \\ \{(AA)_3', (BB)_3'\} = \{-A_2^*\ B_2^*, -\overline{B_2^*} - \overline{A_2^*}\} \end{cases} \\ \\ \{A_2', B_2'\} = \{-\overline{B_1^*\ A_1^*}, -\overline{B_1^*} - \overline{A_1^*}\} \quad \ldots \\ \\ \{(AA)_2, (BB)_2\} = \{A_1\ B_1, \overline{B_1} - \overline{A_1}\} \quad \ldots \\ \\ \{(AA)_2', (BB)_2'\} = \{-A_1^*\ B_1^*, -\overline{B_1^*} - \overline{A_1^*}\} \quad \ldots \end{cases} \\ \\ \{A_1', B_1'\} = \{-\overline{B_0^*\ A_0^*}, -\overline{B_0^*} - \overline{A_0^*}\} \quad \ldots \\ \\ \{(AA)_1, (BB)_1\} = \{A_0\ B_0, \overline{B_0} - \overline{A_0}\} \quad \ldots \\ \\ \{(AA)_1', (BB)_1'\} = \{-A_0^*\ B_0^*, -\overline{B_0^*} - \overline{A_0^*}\} \quad \ldots \end{cases}$$

**FIG. 3**

sequence sent by another first communication node at a second

**FIG. 4**

| First communication | communication | First communication |

| 301 | | 301 second |
| location | | resource location |

first sensing sequence at t ←→ second sensing sequence at t

301 first sensing sequence at first resource location and receive the second , the first sensing the first sensing sequence and second sensing sequence , form a pair of complementary sequences

**FIG. 5**

First communication node A

First communication node B

| First sensing sequence | | Second sensing sequence | → t

(a)

First communication node A

First communication node B

| First sensing sequence | | Second sensing sequence | → t

(b)

**FIG. 6**

domain

domain

The first sensing sequence and
second sensing sequence form a pair

**FIG. 7**

| Acquisition | ⌇110 | Communication | ⌇ |

**FIG. 8**

| Communication module | ⌇901 |

**FIG. 9**

**FIG. 10**

interface — 60

60

**FIG. 10**

50

Power supply unit — 59

Wireless communication unit — 51

A/V input unit — 52

User input unit — 53

Sensing unit — 54

Processor — 58

Output unit — 55

Memory — 56

Interface unit — 57

**FIG. 11**

## INTERNATIONAL SEARCH REPORT

| International application No. |
|---|
| **PCT/CN2024/088174** |

**A.    CLASSIFICATION OF SUBJECT MATTER**

H04W 72/044(2023.01)i

According to International Patent Classification (IPC) or to both national classification and IPC

**B.    FIELDS SEARCHED**

Minimum documentation searched (classification system followed by classification symbols)

IPC：H04W

Documentation searched other than minimum documentation to the extent that such documents are included in the fields searched

Electronic data base consulted during the international search (name of data base and, where practicable, search terms used)

CNTXT: VEN: ENTXTC; CNKI; 3GPP: 感知, 信号, 序列, 时域, 频域, 时频, 资源, 第一, 第二, 互补, 相同, 感通一体化, 通信感知一体化, 格雷互补序列, ISAC, sensing, signal, sequence, time, frequency, resource, first, second, GCP, golay complementary pair

**C.    DOCUMENTS CONSIDERED TO BE RELEVANT**

| Category* | Citation of document, with indication, where appropriate, of the relevant passages | Relevant to claim No. |
|---|---|---|
| X | CN 115515245 A (HUAWEI TECHNOLOGIES CO., LTD.) 23 December 2022 (2022-12-23) description, paragraphs [0059]-[0198], and figure 1 | 1-27 |
| X | CN 114402222 A (HUAWEI TECHNOLOGIES CO., LTD.) 26 April 2022 (2022-04-26) description, paragraphs [0108]-[0203], and figure 4 | 1-27 |
| A | CN 116170097 A (WEIWO SOFTWARE TECHNOLOGY CO., LTD.) 26 May 2023 (2023-05-26) entire document | 1-27 |
| A | WO 2023005145 A1 (SPREADTRUM COMMUNICATIONS (SHANGHAI) CO., LTD.) 02 February 2023 (2023-02-02) entire document | 1-27 |

☐ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **03 July 2024** | **13 July 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/088174**

| Patent document cited in search report | | | Publication date (day/month/year) | Patent family member(s) | Publication date (day/month/year) |
|---|---|---|---|---|---|
| CN | 115515245 | A | 23 December 2022 | None | |
| CN | 114402222 | A | 26 April 2022 | None | |
| CN | 116170097 | A | 26 May 2023 | None | |
| WO | 2023005145 | A1 | 02 February 2023 | None | |

Form PCT/ISA/210 (patent family annex) (July 2022)